# FASCICULE DE BREVET EUROPEEN

(11) **EP 1 644 300 B1**
(45) Date de publication et mention de la délivrance du brevet: **27.02.2019**
(21) Numéro de dépôt: 04767840.4
(22) Date de dépôt: 17.06.2004
(51) Int. Cl.: C04B 41/50, C04B 41/00, C04B 41/87, C23C 18/12, H01M 4/86, H01M 4/88, H01M 4/90, C04B 111/00, H01M 8/124

(54) **PROCEDE DE PREPARATION DE COUCHES DE ZIRCONE DOPEE A L'OXYDE D'YTTRIUM**
VERFAHREN ZUR HERSTELLUNG VON SCHICHTEN VON YTTRIUMOXID DOTIERTES ZIRKONOXID
METHOD OF PREPARING LAYERS OF YTTRIA DOPED ZIRCONIA

(30) Priorité: 19.06.2003 FR 0350233
(43) Date de publication de la demande: 12.04.2006
(73) Titulaire: Electricité de France, 75008 Paris (FR); UNIVERSITE PAUL SABATIER (TOULOUSE III), 31062 Toulouse Cedex (FR); CENTRE NATIONAL DE LA RECHERCHE SCIENTIFIQUE, 75794 Paris Cedex 16 (FR)
(72) Inventeur: GAUDON, Manuel, 33000 Bordeaux (FR); LABERTY-ROBERT, Christel, F-31240 L'Union (FR); ANSART, Florence, F-31670 Labege (FR); STEVENS, Philippe, 76139 Karlsruhe (DE)
(74) Mandataire: Ahner, Philippe
(86) Numéro de dépôt international: PCT/FR2004/050278
(87) Numéro de publication internationale: WO 2004/113253

(56) Documents cités:
- WO-A-02/086194
- US-A- 5 591 537
- US-A- 6 074 771
- ZHU, JINGCHUAN ET AL: "Fabrication of zirconia-nickel functionally graded material by dip-coating" CERAMIC TRANSACTIONS , 114(FUNCTIONALLY GRADED MATERIALS 2000), 483-489 CODEN: CETREW; ISSN: 1042-1122, 2001, XP008030436
- TSENG T Y ET AL: "Rheological properties of the aqueous zirconia/colloidal zirconia binder sol system" J. MATER. SCI. (UK), JOURNAL OF MATERIALS SCIENCE, AUG. 1989, UK, vol. 24, no. 8, 1989, pages 2735-2738, XP002279260 ISSN: 0022-2461
- MIKKOLA PASI ET AL: "Colloidal processing of aluminum oxide powder for membrane applications" CERAM INT; CERAMICS INTERNATIONAL 2003, vol. 29, no. 4, 2003, pages 393-401, XP002279261
- YANG X ET AL: "Thin Films by Consolidation and Sintering of Nanocrystalline Powders" JOURNAL OF THE EUROPEAN CERAMIC SOCIETY, ELSEVIER SCIENCE PUBLISHERS, BARKING, ESSEX, GB, vol. 17, no. 4, 1 février 1997 (1997-02-01), pages 525-535, XP004034086 ISSN: 0955-2219
- Reddy ET AL: "Effect of type of solvent and dispersant on NANO PZT powder dispersion for tape casting slurry", , 1 January 2002 (2002-01-01), XP55402794, Retrieved from the Internet: URL:https://rd.springer.com/content/pdf/10 .1023/A:1014387528353.pdf [retrieved on 2017-08-31]

## Description

L'invention concerne un procédé de préparation de couches de zircone yttriée de structure cubique ou tétragonale.

Le domaine technique de l'invention peut être défini de manière générale comme celui du dépôt de couches céramiques, en particulier de couches minces d'oxydes d'éléments métalliques sur des substrats, notamment des substrats métalliques, céramiques ou en verres denses ou poreux.

L'invention s'applique en particulier au dépôt de couches de cathodes et d'électrolytes denses, de faible épaisseur, du type oxyde mixte, à savoir la zircone dopée par l'yttrium (YSZ), dans les piles à combustibles à oxyde solide ("Solid Oxide Fuel-Cell" ou SOFC en anglais).

Les procédés de dépôt en couches d'oxydes d'éléments métalliques peuvent être classés en deux catégories : à savoir, d'une part, les procédés par voie sèche et, d'autre part, les procédés par voie humide.

Par voie sèche, des films minces d'oxydes d'éléments métalliques céramiques, peuvent être préparés notamment par des procédés plasma et des procédés de pulvérisation sous vide.

Dans les procédés plasma, une poudre est pulvérisée par l'intermédiaire d'un plasma sur un substrat sur lequel elle est refroidie. Des films d'une épaisseur maximale de 10 µm sont synthétisés par ces procédés, cependant, des dépôts complémentaires doivent être réalisés pour diminuer la porosité du film. Une autre limitation de ces procédés est qu'ils ne permettent l'utilisation que de substrats de géométrie simple.

Les techniques de dépôt sous vide nécessitent quant à elles des systèmes de vide performants pour pouvoir déposer des films de bonne qualité de moins de 10 µm. De plus, cette technique coûteuse est aussi limitée par la géométrie du substrat.

Par voie humide, les procédés qui permettent à faible coût le dépôt de couches d'oxydes d'éléments métalliques d'épaisseur variable sont essentiellement des procédés chimiques en solution, tels que le procédé sol-gel et le procédé de coulage en bandes (« tape casting » en anglais).

Les procédés sol-gel peuvent être divisés en trois catégories : la voie métallorganique, la voie alcoxyde et enfin la voie polymère qui diffèrent par la nature du sol.

Une technique de dépôt particulièrement avantageuse pour les sols, notamment dans le cadre de la voie polymère est la technique dite d'immersion-retrait (« dip coating », en anglais) qui peut être sommairement découpée en quatre étapes : l'immersion du substrat dans le sol, le retrait du substrat du sol avec une vitesse contrôlée provoquant le dépôt de la couche, l'écoulement du sol depuis le substrat et l'évaporation du solvant.

Le procédé sol-gel mis en oeuvre notamment par la technique de revêtement par immersion-retrait ne permet pas, en une seule étape, l'élaboration de couches d'épaisseur supérieure à 1 µm.

En effet, le procédé sol-gel classique conduit en général à des épaisseurs maximales d'une centaine de nm jusqu'à 250 nm en monocouche et de ce fait, il est impossible d'obtenir des couches d'oxyde d'épaisseur supérieure sans procéder à plusieurs dépôts successifs. Par ailleurs, plusieurs opérations de polissage du substrat sont nécessaires pour réaliser un dépôt dans de bonnes conditions.

Une des limitations majeures du procédé sol-gel est qu'il est difficile de déposer par ce procédé une couche mince sur un substrat poreux. En effet, si les substrats présentent une porosité ouverte, lors du dépôt, le sol s'infiltre par capillarité dans les pores du substrat. Il est alors nécessaire de réaliser un traitement préalable du substrat, par exemple d'appliquer un film intermédiaire sur le substrat qui doit se décomposer à basse température et permettre ainsi l'accrochage de la couche mince sur le substrat.

Dans le cas particulier des couches d'électrolyte des piles à combustible « SOFC », les inventeurs ont pu démontrer que la voie sol-gel ne permettait pas d'obtenir des couches denses, homogènes, non fissurées, couvrantes et d'épaisseur suffisante, par exemple de YSZ, sur des substrats denses et a fortiori sur des substrats poreux.

En d'autres termes, il est apparu que des épaisseurs de couches de YSZ atteintes par la voie sol-gel sont insuffisantes pour répondre au cahier des charges de l'électrolyte d'une « SOFC ». De plus, la synthèse d'une couche de YSZ conduit à une cristallisation hétérogène de l'oxyde en des sites particuliers du substrat si ce dernier est dense et de même nature.

Dans de telles conditions, il s'avère difficile d'obtenir des couches homogènes et denses, même en procédant à des dépôts successifs. Les problèmes se posent avec encore plus d'acuité dans le cas d'un substrat poreux, tel que Ni-YSZ qui est le matériau d'anode des « SOFC » actuellement commercialisé.

Le procédé de coulage en bande (« tape casting », en anglais) est une technologie récente de mise en forme de couches épaisses qui est utilisée notamment pour élaborer l'essentiel des électrolytes des piles à combustible de type « SOFC ».

Ce procédé nécessite la mise en suspension de poudres céramiques dans un milieu généralement non aqueux pouvant comprendre de nombreux additifs, entre autres, des agents de dispersion, des liants organiques et des plastifiants.

L'étape clef de ce procédé se situe au niveau de la préparation de la suspension. Celle-ci s'apparente à une « pâte » et doit être homogène et très visqueuse. L'addition d'un dispersant est nécessaire pour assurer la stabilité de la suspension. Pour pouvoir déposer facilement cette suspension, il est, de plus, nécessaire de lui conférer une cohésion et une flexibilité adéquates par addition de liants et de plastifiants. L'ensemble de ces constituants forme ce que l'on appelle la « barbotine » de coulage en bande (« tape casting »). Une fois la barbotine préparée, celle-ci est déposée sur une surface au moyen d'une lame qui nivelle la pâte pour former un film « cru ».

Le procédé de coulage en bande présente de nombreux inconvénients, en effet la maîtrise de la nature et du dosage des nombreux composés des barbotines est délicate. D'autre part, il semble encore difficile d'élaborer par ce procédé des films de céramiques denses et homogènes d'épaisseur inférieure à la dizaine de µm. Or, dans le cas particulier des piles à combustible, la réduction de l'épaisseur de l'électrolyte à des épaisseurs inférieures à 10 µm est indispensable à l'abaissement des températures de fonctionnement de ces piles.

Enfin, le procédé de coulage en bande offre une faible souplesse car il s'applique difficilement à des substrats de géométrie complexe et ayant éventuellement une grande surface.

Le document WO-A2-02/086194 décrit un procédé de préparation d'une couche d'oxyde d'élément métallique (par exemple d'une couche de zircone yttriée) sur un substrat (par exemple en acier). Une poudre céramique est mélangée avec un solvant de dispersion (par exemple de l'eau) et un dispersant, puis une poudre de polymère est ajoutée au mélange en tant que liant.

Le mélange ainsi obtenu est déposé sur le substrat, puis séché et enfin calciné.

Dans le procédé de ce document, le polymère est ajouté sous la forme d'une poudre et non en solution dans un solvant, et un solvant de dispersion constitué par un mélange azéotropique éthanol/méthyl-éthylcétone n'est pas mentionné.

Le document US-A-6,074,771 décrit la préparation d'une couche de céramique sur un substrat métallique.

Une poudre de zircone est dispersée dans un solvant de dispersion organique qui est un mélange d'hexanol et d'hexadécane. Un dispersant est ajouté. Un deuxième liquide est ajouté à la suspension de zircone. Ce deuxième liquide est une solution d'un polymère, à savoir le poly méthacrylate de 2-éthylhéxyle dans un solvant qui est le 1-phénylnonane. Après avoir mélangé la suspension de zircone et la solution de polymère, la suspension ainsi obtenue est déposée sur un substrat métallique pour donner une couche crue qui est séchée puis calcinée.

Un solvant de dispersion constitué par un mélange azéotropique éthanol/méthyl-éthylcétone n'est pas mentionné dans ce document.

Le document Reddy ET AL: "Effect of type of solvent and dispersant on NANO PZT powder dispersion for tape casting slurry", 1 janvier 2002, montre la préparation d'une dispersion de poudre de PZT dans un solvant qui est le mélange azéotropique d'éthanol/méthyl-éthylcétone (MEK) utilisant un phosphate ester comme dispersant. Ce mélange ne contient ni plastifiant ni liant. Une deuxième suspension est formée par l'ajout d'un polymère dans un solvant (le PVB), avec un plastifiant et un homogénéisant. Le dépôt de la suspension sur un substrat est effectué par un procédé de coulage en bande. La couche crue résultante est séchée.

Le document US5591537 montre la préparation d'une dispersion de poudre d'YSZ dans un solvant qui est le mélange azéotropique d'éthanol/méthyl-éthylcétone utilisant un dispersant. Ce mélange ne contient ni plastifiant ni liant. Une deuxième suspension est formée par l'ajout d'un polymère dans un solvant (le PVB), avec un plastifiant et avec PEG. Le dépôt de la suspension sur un substrat est effectué par un procédé de coulage en bande. La couche crue résultante est séchée et frittée.

Il n'existe donc pas au regard de ce qui précède un procédé qui permette la préparation de couches de zircone yttriée de structure cubique ou tétragonale d'épaisseur variable allant notamment de 1 µm à plusieurs dizaines de microns, par exemple jusqu'à 200 µm sur tous types de substrats.

Il existe encore un besoin pour un procédé simple, fiable, peu coûteux présentant un nombre limité d'étapes qui permette de préparer des couches, films, dépôts, de grande qualité, homogènes, non fissurées, à porosité contrôlée, sur des substrats denses mais aussi poreux, ces substrats pouvant avoir de plus une surface importante et/ou pouvant présenter une géométrie complexe.

Il existe aussi un besoin pour un tel procédé qui ne nécessite aucune opération de traitement préalable du substrat, notamment poreux, tel qu'un polissage ou un dépôt préliminaire d'un film d'apprêt.

Il existe en particulier un besoin pour un procédé permettant de déposer, de préférence en une seule et unique étape, des couches de zircone yttriée de structure cubique ou tétragonale dans la gamme d'épaisseur de 1 à 10 µm ; cette gamme d'épaisseur n'étant actuellement pas accessible par les techniques mentionnées ci-dessus pour la mise en forme de films minces ou épais, à savoir la voie sol-gel pour des épaisseurs inférieures à 1 µm, ou la technique de coulage en bande pour des épaisseurs supérieures à une dizaine de µm.

Le but de l'invention est de fournir un procédé de préparation de couches de zircone yttriée de structure cubique ou tétragonale sur un substrat qui réponde entre autres aux besoins ci-dessus.

Le but de la présente invention est encore de fournir un procédé de préparation de couches de zircone yttriée de structure cubique ou tétragonale sur un substrat qui ne présente pas les inconvénients, défauts, désavantages et limitations des procédés de l'art antérieur et notamment des procédés sol-gel et des procédés de coulage en bande et qui résolve les problèmes des procédés de l'art antérieur.

Ce but et d'autres encore sont atteints, conformément à l'invention, par un procédé de préparation d'une couche de zircone yttriée de structure cubique ou tétragonale sur un substrat, tel qu'exposé dans la revendication 1.

Le procédé selon l'invention présente une suite spécifique d'étapes spécifiques qui n'ont jamais été décrites dans l'art antérieur.

Le procédé selon l'invention comprend en fait à la fois des caractéristiques d'un procédé de fabrication de couche d'oxyde par la méthode immersion-retrait de sols de type polymère et d'un procédé de coulage en bande.

Le fait de combiner ainsi des caractéristiques appartenant à deux procédés fondamentalement différents pour parvenir au procédé selon l'invention est en lui-même extrêmement surprenant.

Le procédé selon l'invention peut en fait être défini comme un procédé intermédiaire entre le procédé d'immersion-retrait de sols et le procédé de coulage en bande.

Le procédé selon l'invention repose sur l'élaboration de suspensions, puis sur la préparation de dépôts de ces suspensions sur un substrat par une technique de revêtement par immersion-retrait.

Le procédé selon l'invention se différencie du procédé sol-gel en ce qu'il fait appel à une suspension de poudre d'oxyde métallique dans un solvant de dispersion lui-même additionné à un sol polymère et non à un sol véritable. De ce fait, le revêtement sur substrat poreux est réalisé sans difficulté.

Par rapport à un procédé de « coulage en bande », la suspension mise en oeuvre dans l'invention s'affranchit des difficultés liées à l'utilisation de plastifiants et de liants et d'autres additifs.

La mise en oeuvre d'un procédé de revêtement par immersion ("dip coating") pour effectuer le dépôt d'une suspension est extrêmement surprenante, alors qu'il est couramment utilisé pour le dépôt de solutions.

Le procédé de dépôt utilisé selon l'invention (revêtement par immersion) permet une plus grande souplesse que le coulage en bande et assure aussi un dépôt d'excellente qualité sur des substrats possédant une grande surface, par exemple une surface de 1 cm² à 100 cm² et/ou possédant des géométries complexes.

Le procédé selon l'invention présente tous les avantages des procédés sol-gel et des procédés de coulage en bande sans en présenter aucun des inconvénients.

Ainsi, le procédé selon l'invention, à l'instar des procédés sol-gel présente-t-il les avantages suivants :
- dépôt réalisable sur des substrats de forme complexe et/ou de grande surface,
- forte adhérence de la couche au substrat après calcination, de par la décomposition du polymère contenu dans la suspension de dépôt ;
mais il n'a pas, en revanche, l'inconvénient d'être limité à de faibles épaisseurs de couches, inférieures au micron, et à des substrats non poreux.

De même, le procédé selon l'invention, à l'instar des procédés de coulage en bande présente les caractéristiques avantageuses suivantes :
- possibilité de déposer de la zircone yttriée de structure cubique ou tétragonale qui peut être élaborée sous forme et qui peut être dispersée en solution,
- possibilité d'effectuer le dépôt sur des substrats poreux,
mais il ne fait pas appel à des plastifiants, liants et autres additifs, et surtout il n'a pas l'inconvénient d'être limité à des épaisseurs supérieures à la dizaine de µm.

Le procédé selon l'invention permet à l'issue de l'étape e), c'est à dire sans avoir à répéter le procédé et notamment les étapes c) et d) du procédé, de préparer des couches dont l'épaisseur peut varier entre de larges limites, par exemple de 1 µm à 100 µm, ces couches présentant une porosité contrôlée, que ce soit sur un substrat dense ou poreux. Un intérêt particulier du procédé de l'invention est qu'il peut notamment couvrir la gamme d'épaisseur allant de 1 µm à 10 µm qui n'est pas accessible par les techniques classiquement utilisées pour la mise en forme de films minces ou épais, puisque la voie sol-gel permet de préparer seulement des couches de moins de 1 µm et le coulage en bandes permet seulement le dépôt des couches d'épaisseur supérieure à 10 µm.

Les couches préparées par le procédé selon l'invention sont d'une excellente qualité, et sont homogènes, sans fissures, uniformes en épaisseur.

En d'autres termes, elles possèdent une microstructure parfaitement contrôlée sur tout type de substrat, dense, poreux, de petite ou de grande taille, de géométrie simple ou complexe. Les films préparés par le procédé de l'invention, de par leurs caractéristiques morphologiques et leurs propriétés, sont notamment adaptés aux électrolytes dans les piles à combustible haute température ou les barrières thermiques.

Le procédé selon l'invention assure un contrôle très précis de la microstructure du film déposé : en ce qui concerne la porosité qui peut varier entre 0 et 30% en volume, la taille des grains qui peut varier, par exemple de 50 nm à 5 µm, et la surface spécifique (rapport de la surface réelle de l'oxyde sur la surface géométrique de substrat recouverte par le dépôt) qui peut aller de 1 m²/m² à plus de 100 m²/m².

En outre, au contraire de l'art antérieur, aucun traitement préalable du substrat par polissage ou dépôt préliminaire de film n'est nécessaire et le procédé est ainsi grandement simplifié. Le procédé selon l'invention ne met en oeuvre qu'un nombre limité d'étapes simples, fiables, ce qui induit des coûts de fabrication réduits.

L'oxyde d'élément métallique est la zircone yttriée de structure cubique ou tétragonale.

Le solvant de dispersion est le mélange azéotropique éthanolméthyl-éthyl-cétone (proportions : 60-40 en volume).

Généralement, la teneur de la poudre de zircone yttriée de structure cubique ou tétragonale dans la suspension A est de 1 à 80 % en masse, de préférence de 20 à 60 % en masse, de préférence encore de 30 à 50%, mieux de 30 à 40% en masse.

La taille des particules de la poudre de zircone yttriée de structure cubique ou tétragonale est généralement de 5 nm à 5 µm, de préférence de 100 à 300 nm, mieux de 50 nm à 300 nm. La taille est définie comme étant la plus grande dimension de la particule. Les particules peuvent avoir une forme quelconque, mais de préférence les particules de la poudre ont généralement une forme sphérique ou assimilable à une sphère. Leur taille est alors définie par le diamètre de la sphère.

Le dispersant est choisi parmi les phosphates esters.

Un dispersant particulièrement préféré est le phosphate ester commercial MELIORAN® PE-312 commercialisé par la société CECA® SA.

Généralement, la teneur massique en dispersant dans la suspension A est de 0,1 à 10 % en masse par rapport à la masse de poudre sèche de zircone yttriée de structure cubique ou tétragonale additionnée, de préférence de 2 à 3%.

Généralement, le polymère dans la solution de l'étape b) est choisi parmi les polymères à longue chaîne carbonée ou les esters. De préférence, ce polymère est choisi parmi les poly(esters aliphatiques).

Un polymère particulièrement préféré est celui susceptible d'être obtenu à partir de la réaction en milieu acide, par exemple acide acétique, entre l'héxaméthylènetétramine et l'acétylacétone.

Dans la présente invention, un moyen de déterminer la teneur en polymère et la longueur des chaînes polymères dans la solution de l'étape b) est d'effectuer des mesures de la viscosité de cette solution.

La viscosité de la solution peut varier de 5 mPa.s à 1000 mPa.s, de préférence de 20 mPa.s à 100 mPa.s.

Généralement dans l'étape b) la solution de polymère est ajoutée à la suspension A dans une proportion exprimée en rapport massique (rₘ) de masse de solution polymère/masse de dispersion A de 0,01 à 3, de préférence de 0,1 à 0,6, de préférence encore de 0,1 à 0,5.

Dans la présente description, le terme suspension dispersée désigne une dispersion de « poudre sèche » dans un solvant, aqueux ou organique. Il indique qu'une « séparation » de la poudre en particules individuelles : absence d'agrégats, d'agglomérats ou de floculats, est réalisée dans le milieu (médium) liquide.

Par ailleurs, dans cette description, le terme agrégat est employé pour désigner un « paquet » de particules individuelles fortement compactées (cristallites individuels présentant des faces cristallines communes) alors que le terme d'agglomérat désigne un « paquet » présentant une densité plus faible (particules individuelles plus faiblement liées ne présentant que peu d'atomes communs). Enfin, on désigne par floculat un ensemble de particules faiblement reliées entre lesquelles le solvant peut s'insérer.

Le procédé de l'invention va maintenant être décrit en détail dans la description qui suit, fait référence aux dessins joints dans lesquels :
- la figure 1 est un graphique qui donne l'évolution de l'épaisseur "e" de couches (en µm) d'YSZ préparées par le procédé de l'invention en fonction du rapport rₘ des suspensions ;
- la figure 2 donne l'évolution de la viscosité apparente (en CP) des suspensions B en fonction du rapport rₘ ;
- la figure 3 est un graphique qui donne l'épaisseur "e" (µm) de couches d'YSZ déposées par le procédé de l'invention en fonction de la teneur en poudre TP (%) de la suspension B.

Dans la première étape du procédé de l'invention (étape a)), on réalise la dispersion d'une poudre qui est de préférence une poudre sèche, c'est-à-dire dont le taux d'humidité est faible, par exemple inférieure à 3% en masse, dans un milieu de dispersion comprenant un solvant de dispersion aqueux ou organique.

La séparation de la poudre en particules individuelles est réalisée dans le milieu liquide à l'aide d'un dispersant. On obtient ainsi une suspension A ou suspension primaire (« prime-suspension ») de ladite poudre dans ledit milieu liquide comprenant un solvant.

L'application principale visée par l'invention est l'utilisation des couches préparées en tant qu'électrolyte pour pile à combustible du type « SOFC », de ce fait une poudre d'oxyde convenant particulièrement à ces buts est une poudre de zircone stabilisée à l'yttrium de structure cubique (ZrO₂-8 % Y₂O₃) vendue par la Société TOSOH® sous la dénomination commerciale T-Z8Y.

La poudre T-Z8Y est constituée de particules individuelles pouvant être assimilées à des sphères dont le diamètre est de 100 à 200 nm et qui sont regroupées en agglomérats plus ou moins sphériques de diamètre d'environ 30 à 40 µm de diamètre. La description qui suit sera donc faite tout particulièrement avec une telle poudre mais il est bien entendu que cette description peut être étendue à des poudres de même composition mais de morphologie différente élaborées par chimie douce.

La poudre par exemple de YSZ est dispersée dans un milieu liquide, qui comprend un solvant de dispersion ainsi qu'un dispersant, mais selon l'invention et au contraire des « barbotines » de coulage en bande, ne contient ni plastifiant, ni liant.

Il a en effet été montré par les inventeurs que les couches préparées à partir de suspensions ne contenant pas de dispersant sont inhomogènes. L'introduction d'un agent dispersant est donc nécessaire pour permettre une meilleure dispersion de la poudre dans la suspension.

Le choix du dispersant est fonction à la fois de la composition de l'oxyde à disperser et du solvant. Ce choix est difficile car jusqu'à présent aucune étude relative aux dispersants dans un milieu comparable à la suspension A n'a été effectuée.

Le dispersant peut de manière générale être choisi parmi les phosphates esters habituellement utilisés dans la préparation de barbotines.

Il s'est avéré qu'un phosphate ester commercial, le MELIORAN® P312, commercialisé par la Société CECA S.A., était particulièrement adéquat, en particulier pour disperser les poudres de YSZ, telles que la poudre T-Z8Y, mentionnée ci-dessus, notamment dans un solvant constitué par un mélange azéotropique d'éthanol et de méthyl-éthyl-cétone (EtOH-MEK). En effet, ce dispersant conjugue un effet stérique et un effet électrostatique s'opposant tous deux à la réagglomération des poudres après éclatement des agglomérats en particules individuelles lors de l'étape de calcination.

Il s'est avéré qu'un solvant de dispersion particulièrement adéquat était constitué par un mélange azéotropique d'éthanol et de méthyl-éthyl-cétone (proportions : 60-40 en volume).

Par exemple, ce solvant en utilisant comme dispersant le PE-312, mentionné plus haut, permet d'obtenir une suspension stable de la poudre commerciale T-Z8Y sans agglomérat. Le fort degré de dispersion de la poudre obtenu selon l'invention se traduit par la possibilité d'introduire dans le solvant de dispersion une très grande quantité de poudre à savoir : environ 75 % ; ceci tout en conservant les caractéristiques rhéologiques d'un fluide.

La teneur en poudre de zircone yttriée de structure cubique ou tétragonale dans la suspension A est généralement de 1 à 80 % en masse, de préférence ici de 20 à 60 % en masse.

La teneur massique en dispersant dans la suspension A par rapport au poids de poudre est généralement de 0,1 à 10 %, de préférence de 2 à 3 %.

La dispersion de la poudre dans la suspension A peut par exemple être obtenue par agitation aux ultrasons pendant une durée de quelques minutes, par exemple de 10 minutes.

Selon une caractéristique essentielle de l'invention, on ajoute à la suspension A une solution d'au moins un polymère dans un solvant.

Les chaînes polymères floculent alors l'ensemble de la poudre dispersée pour former un réseau de floculation comprenant les chaînes polymères, la poudre et qui peut aussi comprendre le dispersant.

Sans addition de cette solution polymère, il est impossible, même en présence de dispersant, d'obtenir un film homogène et couvrant à partir de la suspension qui n'adhère alors que très peu au substrat. Le film déposé est alors principalement constitué du solvant. Après recuit, les films obtenus sont très fins avec une épaisseur inférieure au micron, peu couvrants et très inhomogènes en épaisseur.

La solution d'au moins un polymère dans un solvant qui est ajoutée à la suspension A au cours de l'étape b) comprend un solvant choisi parmi l'eau ou différents solvants organiques, tels les alcools ou les acides aliphatiques ou encore les cétones. Les solvants préférés sont des solvants de basse tension superficielle permettant ainsi une grande mouillabilité du substrat. Un solvant préféré est l'acide acétique.

Le ou les polymères peut(vent) être choisi(s), de préférence parmi les poly(esters aliphatiques), mais d'autres polymères organiques peuvent aussi convenir.

Un autre polymère préféré est celui susceptible d'être obtenu à partir des agents polymérisants suivants : Héxaméthylène tétraamine (HMTA) et acétylacétone (ACAC) qui sont de préférence présents en proportions équimolaires.

La polymérisation en chaînes organiques s'effectue par une réaction d'« hydrolysation » à chaud, par exemple à une température de 50 à 80°C, et en milieu modérément acide, par exemple en milieu acide acétique, entre l'HMTA et ACAC.

De manière à obtenir des couches de zircone yttriée de structure cubique ou tétragonale après calcination plus denses, la solution polymère peut contenir en outre les mêmes éléments métalliques que ceux de la poudre de zircone yttriée de structure cubique ou tétragonale dispersée.

A cet effet, des sels, tels que nitrates, carbonates de ces éléments métalliques sont alors ajoutés à la solution polymère à une concentration généralement comprise entre 0,01 et 5 mol.L⁻¹.

Le degré d'avancement de la réaction de polymérisation entre l'HMTA et l'ACAC peut être contrôlé. La concentration en agents polymérisants de la solution est généralement de 0,01 à 10 mol.L⁻¹, de préférence de 0,5 à 1 mol.L⁻¹.

La viscosité de la solution polymère qui est contrôlée selon les paramètres précédents, concentration et avancement du degré de polymérisation des agents polymérisants, est généralement de 1 à 1000 mPa.s, de préférence de 20 à 100 mPa.s.

La solution ou sol contenant le polymère est additionné à la suspension A dans des proportions exprimées en rapport massique rₘ : masse de sol/masse de la solution de dispersion A, ce rapport variant généralement de 0,01 à 3, de préférence de 0,1 à 0,6, de préférence encore de 0,1 à 0,5.

Suite à l'addition de la solution de polymère à la suspension A, on peut effectuer une homogénéisation par simple agitation, moyennant quoi on obtient une suspension B.

Le mode d'introduction des constituants de la suspension constitue également une caractéristique importante du procédé de l'invention. En effet, il s'est avéré que l'ordre d'addition des différents constituants a une influence primordiale sur l'homogénéité de la suspension B obtenue et sur l'état de dispersion de la poudre dans cette suspension.

Deux modes d'introduction ont été ainsi comparés dans un premier mode d'introduction, on élabore une première suspension dans laquelle la poudre de zircone yttriée de structure cubique ou tétragonale est introduite dans un mélange solvant de dispersion/solution-sol polymère ; tandis que dans un second mode d'introduction qui est conforme à l'invention, on élabore une seconde suspension dans laquelle la poudre de zircone yttriée de structure cubique ou tétragonale est préalablement dispersée dans le solvant de dispersion avant addition de la solution-sol de polymère.

On teste ces deux modes d'introduction pour différents rapports rₘ (0,05 ; 0,25 et 0,5) entre les masses de solution-sol additionné et de solvant de dispersion (rₘ = mₛₒₗ/m (solvant de dispersion)).

Ainsi, pour le premier mode de dispersion, le sol et le solvant de dispersion sont tout d'abord mélangés dans les proportions déterminées (rₘ). Le dispersant est ajouté à ce mélange avant l'introduction de la poudre.

Pour le second mode de dispersion, le dispersant est mélangé uniquement au solvant de dispersion, puis, la poudre est ajoutée. Cette suspension est soumise à une agitation aux ultrasons pendant dix minutes. Enfin, le sol est additionné dans les proportions définies (rₘ). L'homogénéisation est effectuée simplement par agitation de la suspension.

L'état de dispersion de la poudre est caractérisé par analyses MEB (Microscopie Electronique à Balayage) de prélèvements séchés de suspensions. Les micrographies obtenues sur les prélèvements des diverses suspensions élaborées suivant le premier mode d'introduction sont toutes identiques quel que soit le rapport rₘ et on ne s'intéressera donc qu'à une micrographie caractéristique, pour un rapport rₘ = 0,25.

Par contre, les micrographies obtenues sur les prélèvements séchés des suspensions élaborées suivant le second mode d'introduction présentent un aspect différent pour les différents rapports rₘ.

Une comparaison entre les micrographies montre que le second mode d'introduction permet d'obtenir des suspensions de degré de dispersion plus élevé que celles obtenues par le premier.

En effet, les suspensions issues du premier mode d'introduction présentent des agglomérats de taille comprise entre 20 et 50 µm. Il peut être conclu que, dans ce cas, le solvant de dispersion ne semble avoir aucun effet bénéfique.

Par contre, quel que soit le rapport rₘ, les agglomérats des suspensions issues du second mode d'introduction selon l'invention ont des tailles inférieures à 20 µm. Dans tous les cas, il semble que la majeure partie de la poudre soit dispersée.

La comparaison de l'état de dispersion des suspensions issues de ces deux modes d'introduction est révélatrice d'une réaction entre le sol et le dispersant. La mise en contact du sol et du dispersant avant l'introduction de la poudre semble en effet annihiler l'effet du dispersant. Il est donc indispensable que la poudre et le dispersant soient en contact dans un solvant adéquat avant l'introduction des chaînes polymères du sol.

Le substrat peut être de nature quelconque mais il s'agit généralement d'un substrat solide.

Il peut être choisi par exemple parmi les substrats en métal, tels que les substrats en acier, en silicium ou en aluminium ; parmi les substrats en céramique, tels que les substrats en alumine ou en zircone yttriée ou non dopée ; parmi les substrats en verre, et parmi les substrats composites formés par deux ou plus de ces familles de matériaux.

Un substrat préféré dans le cadre des applications « SOFC » est un substrat en CERMET Ni-YSZ poreux formant par exemple une anode, par exemple l'anode d'une pile à combustible de type SOFC.

Les substrats utilisés selon l'invention n'ont pas à subir de traitement préalable au dépôt de la suspension que ce soit un polissage, un dépôt de film ou autre, c'est là un des avantages du procédé de l'invention.

Le substrat peut être poreux ou parfaitement dense. Dans ce dernier cas, il peut s'agir notamment d'un substrat en oxyde réfractaire.

Dans le cas où le substrat est un substrat poreux, il peut présenter une porosité ouverte et/ou fermée pouvant aller par exemple jusqu'à 50% en volume. C'est là un des autres avantages du procédé de l'invention que de permettre d'obtenir des couches de zircone yttriée de structure cubique ou tétragonale d'excellente qualité également homogènes sur ces deux types de substrats. A titre de substrats denses, citons par exemple les substrats polycristallins YSZ. A titre de substrats poreux, citons le CERMET Ni-YSZ mentionné plus haut.

Le contrôle de l'épaisseur peut se faire aussi en faisant varier la vitesse de retrait du substrat de la suspension b (étape 2 du procédé d'immersion-retrait). Cette vitesse généralement peut varier entre 0,1 et 100 cm.min⁻¹, et de préférence entre 1 et 10 cm.min⁻¹. Dans les expériences suivantes la vitesse de retrait est constante et fixée à 1,4 cm.min⁻¹.

Dans un premier temps, des dépôts de couches ont été effectués sur substrat dense YSZ.

Il a tout d'abord été mis en évidence que le rapport rₘ ci-dessus a une influence importante sur les propriétés des couches finales de zircone yttriée de structure cubique ou tétragonale obtenues. Afin d'étudier exclusivement l'influence des quantités relatives de sol et de solvant de dispersion sur la morphologie des couches issues des dispersions, on réalise la synthèse de ces couches pour différents rₘ, tandis que les autres paramètres de synthèse sont maintenus constants, par exemple la teneur en poudre est maintenue égale à 50 % pour tous les rapports rₘ. La morphologie des couches issues des suspensions en ce qui concerne leur épaisseur, le recouvrement du substrat, la présence d'agglomérats, la densité, etc., est réalisée par microscopie électronique à balayage.

Les micrographies montrent que, quel que soit le rapport rₘ, les films obtenus sont continus et homogènes et que plus le rapport rₘ dans les suspensions augmente, plus le nombre de fissures à la surface des couches est important. C'est la raison pour laquelle il est préférable, généralement, de se limiter à un rₘ de 0,6.

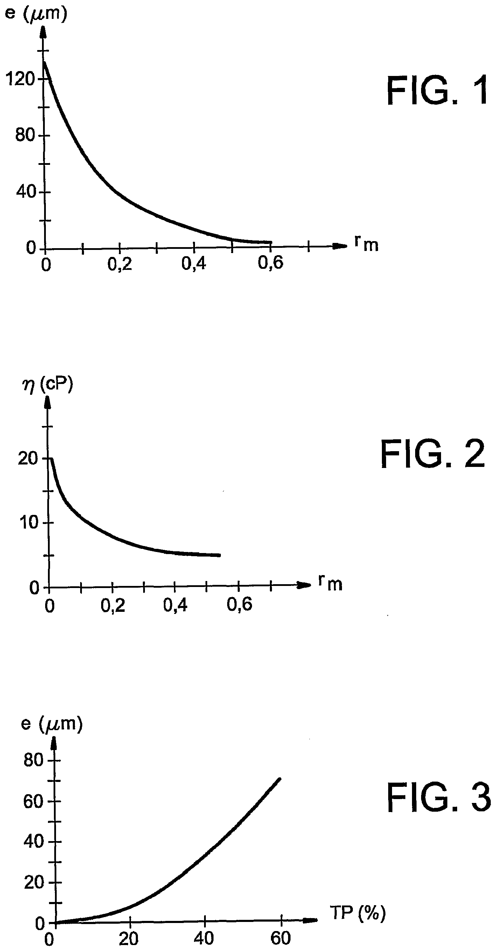

En ce qui concerne l'épaisseur des couches, les micrographies montrent que tout en conservant la teneur en poudre des suspensions constante, le contrôle du rapport rₘ de la suspension permet d'obtenir des couches dont l'épaisseur varie dans une large gamme : une couche d'environ 80 µm est obtenue pour un rapport rₘ = 0,05 alors qu'une couche de seulement 7-8 µm est obtenue pour un rapport rₘ = 0,5. Le rapport rₘ a donc une très forte influence sur l'épaisseur des couches. L'évolution de l'épaisseur de couches (en µm) en fonction du rapport rₘ des suspensions (0 ≤ rₘ ≤ 0,6) est présentée sur la figure 1.

La figure 1 met en évidence une décroissance asymptotique de l'épaisseur des couches de YSZ avec le rapport rₘ. Toutefois, pour la valeur rₘ = 0, qui correspond à une suspension sans polymères, les couches sont inhomogènes et leur épaisseur est très fine (épaisseur voisine du micron), ce fait montre l'importance de l'addition, conformément à l'invention, d'un sol de polymère.

En ce qui concerne la densité des couches après une calcination de 2h à 1000°C, on constate sur les micrographies des couches que les couches les plus fines sont peu denses.

Les couches les plus fines sont celles issues des suspensions de rapports rₘ les plus élevés, c'est-à-dire des suspensions comprenant le plus grand nombre de chaînes polymères. On en conclut que la porosité est principalement liée à la décomposition des chaînes polymères des suspensions et non du solvant de dispersion.

Il résulte de ce qui précède que, en contrôlant la quantité de solution polymère additionnée aux suspensions, on peut contrôler l'épaisseur des couches élaborées dans un large domaine, ainsi que, dans une moindre mesure, leur densité. En effet, le rapport rₘ a une très forte influence sur la rhéologie des suspensions et donc sur l'épaisseur des couches.

L'évolution de l'épaisseur des couches issues de suspensions de différents rapports rₘ a été corrélée à l'évolution de la viscosité apparente de ces suspensions. En effet, par le procédé d'immersion-retrait employé, il est clair que la viscosité des suspensions exerce également une influence certaine sur la morphologie des couches minces mises en oeuvre dans le procédé de l'invention. La figure 2 donne l'évolution de la viscosité apparente η (en mPa.s) des suspensions B en fonction du rapport rₘ.

La viscosité d'une suspension ne contenant pas de sol est très faible, inférieure à 5 mPa.s. L'addition de sol dans la suspension provoque tout d'abord une brusque augmentation de la viscosité apparente, puis, celle-ci décroît selon une fonction asymptotique avec le rapport rₘ.

L'évolution de la viscosité des suspensions en fonction du rapport rₘ présente donc de grandes similitudes avec l'évolution de l'épaisseur des couches en fonction de ce même rapport. En effet, une décroissance selon une fonction asymptotique est dans les deux cas observée.

Par ailleurs, afin d'expliquer l'évolution de la viscosité des suspensions en fonction du rapport rₘ, la rhéologie de ces suspensions a été étudiée et parallèlement, en vue du même objectif, des tests de sédimentation ont été réalisés sur les suspensions.

Il apparaît à partir des études de sédimentation réalisées que l'addition de sol dans les suspensions provoque non pas une réagglomération d'une partie de la poudre, mais une floculation de celle-ci avec le solvant. De plus, la netteté du front de sédimentation, due à l'absence totale de poudre dans le solvant surnageant, et ceci, tout au long de la sédimentation, tend à montrer que la totalité des particules de poudre est floculée et non agglomérée en entités de tailles variables. En effet, si l'addition de sol avait provoqué uniquement une agglomération de la poudre, il serait impossible d'interpréter la formation immédiate du front de sédimentation parfaitement défini sauf dans le cas d'agglomérats très homogènes. Une floculation de l'ensemble de la poudre, probablement simultanée à l'introduction du sol dans les suspensions, a donc lieu dans ces suspensions.

Par ailleurs, dans ces suspensions, l'augmentation du volume de sédiment avec le rapport rₘ atteste de la présence majoritaire de sol par rapport au solvant, tel que EtOH-MEK dans les floculats et donc, probablement, de la participation des chaînes polymères à la formation des floculats. Nous sommes en présence d'un réseau continu constitué de poudre et de chaînes polymères. Ainsi, sous l'effet de la gravité, il semble donc que c'est l'ensemble de ce réseau qui sédimente pour donner le sédiment final. Or, plus le rapport rₘ est élevé et plus le rapport entre le nombre de chaînes et le nombre de particules solides participant au réseau est élevé. Une diminution de la masse volumique du sédiment est donc constatée avec l'augmentation du rapport rₘ.

Il est très intéressant de noter que la possibilité de déposer des films épais à partir de telles suspensions provient très certainement de la cohérence du réseau formé par les chaînes polymères du sol et les particules de poudre. Ce qui montre que dans la suspension B mise en oeuvre dans le procédé de l'invention se produit une véritable synergie entre la poudre de zircone yttriée de structure cubique ou tétragonale et le polymère du sol.

De plus, la formation d'un tel réseau explique la diminution de densité des couches obtenues lorsque le rapport rₘ augmente. En effet, après séchage, le dépôt peut être assimilé à une couche mince de ce réseau. Il est alors certain que la porosité de la couche finale de zircone yttriée de structure cubique ou tétragonale est due à la décomposition des chaînes polymères du sol lors de l'étape de calcination. Ainsi pour des rapports rₘ élevés, les réseaux contenant une quantité de sol importante, conduisent après calcination, à des couches poreuses.

Toutefois, il semblerait en outre qu'une réaction chimique entre le dispersant et le sol puisse avoir lieu. En effet, celle-ci expliquerait en partie l'inefficacité du dispersant lorsque celui-ci est ajouté au sol avant l'introduction de la poudre selon un mode opératoire contraire à celui de l'invention.

Sans vouloir être lié par aucune théorie, les expériences de sédimentation, de rhéologie, et une étude des lois de comportement des suspensions permettent d'avancer l'hypothèse que la forte influence de la quantité de sol sur l'état de dispersion de la poudre en suspension est due à deux phénomènes. En premier lieu, elle est due à la formation d'un réseau cohérent entre les chaînes polymères du sol et la poudre, et, en second lieu, à la souplesse plus ou moins grande du réseau formé. Ce dernier paramètre semble fonction du rapport entre le nombre de chaînes et le nombre de particules de poudre constituant le réseau.

On a vu plus haut que le contrôle de l'épaisseur des couches élaborées peut se faire en agissant sur la quantité de sol additionnée aux suspensions A, mais le contrôle de l'épaisseur peut aussi se faire en modifiant d'autres paramètres de synthèse des suspensions et notamment la teneur en poudre dans les suspensions B.

On a ainsi préparé des couches YSZ à partir de suspensions ayant un rapport rₘ constant et égal à 0,25 et présentant différentes teneurs en poudre, à savoir 20 %, 35 % et 60 %. Les différentes couches obtenues ont été observées par microscopie électronique à balayage, et l'épaisseur des couches a été calculée à partir des micrographies en coupe des couches avec une incertitude estimée à 2 µm.

Pour des teneurs en poudre inférieures à 20 %, les couches ne recouvrent généralement pas totalement le substrat.

Selon la figure 3, l'épaisseur des couches (en µm) en fonction de la teneur en poudre de la suspension B évolue selon une loi de puissance, de coefficient d'environ 1,8. Cette évolution contrairement au cas des couches issues du procédé sol-gel classique, n'est donc pas une fonction linéaire du taux de zircone yttriée de structure cubique ou tétragonale dans le milieu précurseur. Comme lors de l'étude précédente (contrôle de l'épaisseur des couches par le rapport rₘ des suspensions), l'évolution de l'épaisseur des couches a pu être corrélée à l'évolution de la viscosité des suspensions.

Le dépôt de cette suspension B est effectué sur le substrat par un procédé de revêtement par immersion ("dip coating"). Le procédé de revêtement par immersion comprend généralement cinq étapes. Dans une première étape, le substrat est plongé, trempé dans la suspension. Après immersion totale du substrat dans la suspension, celui-ci est retiré de la suspension B avec une vitesse contrôlée, cette vitesse contrôlée est généralement selon l'invention de 0,1 à 100 cm.min⁻¹, de préférence de 1 à 10 cm.min⁻¹.

Lors de cette étape de retrait, c'est la compétition entre les forces de gravité, la viscosité et la tension de surface du sol qui détermine la géométrie du ménisque concave à l'interface substrat-liquide dont dépend l'épaisseur du film déposé. Puis, le dépôt s'amincit sous l'effet combiné de la gravité et de l'évaporation du solvant. Ces deux dernières étapes sont compétitives et simultanées.

L'étape de dépôt par revêtement par immersion ("dip coating") peut être réalisée dans tout appareil, montage convenant à ce but.

Dans une seconde étude, le procédé mis au point sur substrat dense a été transféré à des substrats poreux, à savoir des cermets Ni-YSZ. Les tentatives de dépôts de sols sur de tels substrats ont montré que les sols issus de la voie sol-gel directe, s'infiltraient par capillarité dans les pores du substrat. En revanche, les essais de dépôts effectués conformément à l'invention à partir de suspensions ont permis de constater que la poudre des suspensions ne s'infiltre pas dans les pores des substrats. Il apparaît donc plus aisé d'obtenir des films sur substrats poreux en utilisant des suspensions.

Comme précédemment sur substrats denses, les dépôts sont effectués, dans un premier temps, à partir de suspensions de rapports rₘ variables pour des teneurs en poudre constantes, puis, dans un second temps, à partir des suspensions de teneurs en poudre variables pour des rapports rₘ constants. Les résultats obtenus sur substrats poreux Ni-YSZ peuvent être comparés directement à ceux obtenus sur substrats denses YSZ.

La première série d'expériences a été effectuée à partir de suspensions dont le rapport rₘ varie de 0,08 à 0,5 et la teneur en poudre constante égale à 50 %, c'est-à-dire dans des conditions similaires à l'étude du substrat dense. On effectue des micrographies des couches obtenues pour des rapports rₘ extrêmes de 0,08 et 0,5.

On s'aperçoit que les épaisseurs obtenues sur substrat poreux sont beaucoup plus importantes que sur substrat dense et ce pour toute valeur de rₘ.

Dans la seconde série d'expériences, pour un rapport rₘ constant (rₘ = 0,25), des couches issues de suspensions de différentes teneurs en poudre (entre 15 et 50 %) ont été élaborées.

Une micrographie correspondant à une suspension de teneur en poudre égale à 35 %, montre que pour cette teneur, la couche commence à fissurer.

Non seulement, les couches obtenues sur substrat poreux sont plus épaisses que celles obtenues sur substrat dense, mais de plus, l'évolution des épaisseurs en fonction de la teneur en poudre des suspensions est plus rapide. Cette évolution peut être décrite par une loi de puissance de coefficient d'environ 2,3.

On en conclut que le transfert du procédé de dépôt des suspensions des substrats denses aux substrats poreux a été réalisé avec succès. Comme nous l'avions démontré sur substrat dense, l'épaisseur des couches augmente proportionnellement à la teneur en poudre et inversement proportionnellement au rapport rₘ. Cependant, les couches obtenues sur substrat poreux sont d'épaisseur supérieure à celle obtenue sur substrat dense. Ce phénomène doit être dû à une interaction supplémentaire entre la suspension et le substrat poreux lors du dépôt. La porosité du substrat doit donc être prise en compte dans la description des phénomènes régissant le dépôt. En effet, sur substrat poreux, l'épaisseur déposée ne peut plus être directement reliée à la viscosité de la suspension.

Le procédé selon l'invention permet au contraire du procédé de dépôt en bande de revêtir des substrats de grande surface, c'est-à-dire d'une surface de 1 à plusieurs dizaines de cm² et/ou de géométrie complexe, par exemple des substrats en forme de tubes ou d'autres objets tridimensionnels.

A l'issue du dépôt de la suspension B sur le substrat (dans l'étape c)), on sèche la couche crue obtenue.

Le séchage est généralement réalisé à une température allant de la température ambiante à 150°C, de préférence de la température ambiante à 50°C. Le séchage peut être réalisé à l'air libre, dans une étuve ou dans un cristallisoir recouvert. Selon la température et l'atmosphère à laquelle il est effectué, la vitesse et la durée du séchage varient, cette durée est généralement par exemple de ou quelques minutes à plusieurs heures, de préférence de 1 minute à 10 heures, de préférence encore d'environ 1 h.

Il s'est avéré sur des micrographies de couches séchées à différentes vitesses, que le nombre de fissures en surface des couches augmente avec la vitesse de séchage. Du procédé de séchage dépend aussi la morphologie des fissures. En effet, avec la diminution de la vitesse de séchage, les fissures deviennent, non seulement moins longues, mais aussi moins ouvertes. On peut considérer au vu de ces expériences que l'étape de séchage est l'étape déterminante vis-à-vis de la fissuration de couches issues de suspensions. En conséquence, de préférence, le séchage est réalisé à la température ambiante sous atmosphère contrôlée et sa durée est d'environ 1 heure.

Suite au séchage, la couche séchée « crue » obtenue est recuite, calcinée à haute température pour former la couche d'oxyde final. La température mise en oeuvre dans cette étape doit être supérieure à la température de tous les composés organiques de la suspension. La température de calcination sera donc généralement de 200°C à 1800°C, de préférence de 400 à 1800°C, de préférence encore de 1000°C à 1400°C, cette température de calcination étant maintenue, appliquée, pendant une durée généralement de quelques secondes par exemple 2 secondes à plusieurs heures, de préférence de 1 à 10 heures.

La température de calcination est atteinte à partir de la température ambiante en observant une vitesse de montée généralement de 0,1 à 100°C.min⁻¹, de préférence de 1 à 10°C.min⁻¹.

Dans le cas où l'on utilise la poudre de T-Z8Y, décrite plus haut, pour déposer une couche de YZS sur un substrat, qui est par exemple un CERMET Ni-YSZ, la poudre ayant été élaborée à 1 000°C, les couches préparées avec cette poudre et subissant un recuit à cette température peuvent être qualifiées de couches « crues ».

Il a été montré qu'une température de 1 300°C pouvait être appliquée aux substrats poreux de type CERMET Ni-YSZ sans pour autant modifier leur porosité. On pourra donc réaliser le traitement de calcination de la couche de YSZ déposée sur ce substrat à une température de 1 300°C pendant une durée de plusieurs heures, par exemple de 2 heures.

Il est également possible lors de l'étape finale de calcination, de réaliser un co-frittage, c'est-à-dire un frittage simultané de la couche de zircone yttriée de structure cubique ou tétragonale et du substrat. Un tel co-frittage peut en particulier se révéler avantageux lorsque l'on cherche à réaliser une couche dense sur un substrat poreux, par exemple des couches d'électrolyte tel que YSZ sur un substrat poreux, par exemple une anode de Ni-YSZ. Pour qu'un co-frittage de la couche mince d'oxyde poreux d'électrolyte et du substrat soit réalisable, il est préférable que ces deux éléments présentent des températures de frittage similaires et des coefficients de dilatation thermique proches, ce qui est précisément le cas pour les matériaux d'anode et d'électrolyte tels que le CERMET Ni-YSZ et YSZ respectivement dont le frittage peut être réalisé généralement à une température de 800 à 1500°C, par exemple de 1 200°C.

L'invention va maintenant être décrite en référence aux exemples suivants donnés à titre illustratif et non limitatif.

### Exemple 1

Dans cet exemple, on élabore une couche mince de zircone yttriée sur un substrat dense de zircone yttriée.

### a) Préparation d'une suspension de poudre de zircone yttriée

100 ml d'un mélange de solvants éthanol (EtOH) et méthyl-éthyl-cétone (MEK) comprenant 60 ml d'EtOH et 40 ml de MEK est préparé.

50 g de ce mélange est prélevé.

Il est ensuite ajouté au mélange 125 mg d'un agent dispersant : le phosphate ester commercial MELIORAN® P-312. Le dispersant est alors dissout et la solution est homogénéisée. A cette solution sont ajoutés 50 g de poudre de zircone yttriée commerciale Tosoh T-8YSZ. La poudre est dispersée durant 5 minutes à l'aide d'ultrasons. Une "prime-suspension" A homogène est ainsi obtenue.

### b) Préparation d'un sol polymère

De l'acétylacétone (Acac) et de l'hexaméthylènetétraamine (HMTA) sont dissous en proportion équimolaire dans de l'acide acétique. La concentration de cette solution en Acac et HMTA est de 0,625 M.

La solution est chauffée sur une plaque chauffante à une température d'environ 80°C. Cette étape est prolongée jusqu'à obtenir un sol polymère visqueux d'une viscosité d'environ 60 mPa.s.

### c) Préparation de la suspension pour le dépôt

A 50 g de la suspension A sont ajoutés 10 g de sol polymère préparé en b). La suspension polymérique obtenue est homogénéisée.

### d) Préparation de la couche

Un substrat dense de zircone yttriée est immergé dans la suspension préparée dans l'étape c) puis retiré à une vitesse de 1,4 cm.min⁻¹. La couche est séchée à la température ambiante puis à l'air. Puis la couche est calcinée à une température de 1300°C.

Ainsi, une couche dense d'environ 40 microns d'épaisseur est obtenue.

### Exemple 2

Dans cet exemple, on élabore une couche mince de zircone yttriée sur un substrat poreux.

Le mode opératoire est le même que dans l'exemple 1 exception faite de l'utilisation d'un substrat poreux Ni-YSZ dont le diamètre des pores varie de 200 nm à 5 microns.

Une couche dense d'environ 100 microns d'épaisseur est obtenue.

Aussi bien dans l'exemple 1 que dans l'exemple 2, l'épaisseur est mesurée par microscopie à balayage. Les couches préparées dans les deux exemples sont homogènes en épaisseur et ne présentent pas de fissures.

## Revendications

1. Procédé de préparation d'une couche d'oxyde d'élément métallique sur un substrat dans lequel on réalise les étapes successives suivantes :
a) dispersion d'une poudre d'oxyde d'élément métallique dans un milieu liquide comprenant un solvant de dispersion et un dispersant, ledit milieu liquide ne comprenant ni plastifiant, ni liant, moyennant quoi l'on obtient une suspension A de ladite poudre d'oxyde d'élément métallique dans ledit milieu liquide ;
b) on ajoute à ladite suspension A, une solution d'au moins un polymère dans un solvant, moyennant quoi, on obtient une suspension B ;
c) on effectue le dépôt de la suspension B sur le substrat par un procédé de revêtement par immersion-retrait , moyennant quoi, on obtient une couche crue ;
d) on sèche la couche crue obtenue dans l'étape c) ;
e) on calcine la couche séchée obtenue dans l'étape d) ; et dans lequel le solvant de dispersion est le mélange azéotropique éthanol/méthyl-éthylcétone ; l'oxyde d'élément métallique est la zircone yttriée de structure cubique ou tétragonale ; et le dispersant est choisi parmi les phosphates esters.

2. Procédé selon la revendication 1, dans lequel la couche d'oxyde d'élément métallique obtenue à l'issue de l'étape e) a une épaisseur de 1 à 100 *µ*m.

3. Procédé selon la revendication 2, dans lequel la couche d'oxyde d'élément métallique obtenue à l'issue de l'étape e) a une épaisseur de 1 *µ*m à 10 *µ*m.

4. Procédé selon l'une quelconque des revendications précédentes, dans lequel la teneur en poudre d'oxyde d'élément métallique dans la suspension A est de 1 à 80 % en masse, de préférence de 20 à 60 % en masse, de préférence encore de 30 à 50 %, mieux de 30 à 40% en masse.

5. Procédé selon l'une quelconque des revendications précédentes, dans lequel les particules de la poudre d'oxyde d'élément métallique ont une taille de 5 nm à 5 *µ*m, de préférence de 100 à 300 nm, mieux de 50 à 300 nm.

6. Procédé selon l'une quelconque des revendications précédentes, dans lequel la teneur massique en dispersant dans la suspension A par rapport à la masse de poudre sèche d'oxyde d'élément métallique additionnée est de 0,1 à 10 % en masse, de préférence de 2 à 3% en masse.

7. Procédé selon l'une quelconque des revendications précédentes, dans lequel le polymère est choisi parmi les poly(esters aliphatiques).

8. Procédé selon l'une quelconque des revendications 1 à 6, dans lequel le polymère est le polymère susceptible d'être obtenu à partir de la réaction entre l'héxaméthylènetétramine et l'acétylacétone en milieu acide par exemple acide acétique.

9. Procédé selon l'une quelconque des revendications précédentes, dans lequel la solution d'au moins un polymère de l'étape b) contient en outre les mêmes éléments métalliques que ceux de la poudre d'oxyde.

10. Procédé selon l'une quelconque des revendications précédentes, dans lequel la solution de l'étape b) a une viscosité de 5 mPa.s à 1000 mPa.s, de préférence de 20 à 100 mPa.s.

11. Procédé selon l'une quelconque des revendications précédentes, dans lequel, dans l'étape b), la solution de polymère est ajoutée à la suspension A dans une proportion exprimée en rapport massique (rₘ) masse de solution polymère/masse de suspension A de 0,01 à 3, de préférence de 0,1 à 0,6, de préférence encore de 0,1 à 0,5.

12. Procédé selon l'une quelconque des revendications précédentes, dans lequel le procédé de revêtement par immersion-retrait de l'étape c) comprend une étape de retrait du substrat de la suspension B a une vitesse contrôlée de 0,1 à 100 cm. min⁻¹, de préférence de 1 à 10 cm.min⁻¹.

13. Procédé selon l'une quelconque des revendications précédentes, dans lequel le séchage est réalisé à une température allant de la température ambiante à 150°C, de préférence de la température ambiante à 50°C.

14. Procédé selon la revendication 13, dans lequel la durée du séchage est de 1 min. à 10 h, de préférence de 1 h.

15. Procédé selon l'une quelconque des revendications précédentes, dans lequel la calcination de l'étape e) est réalisée à une température de calcination de 200 à 1800°C, de préférence de 400 à 1800°C, de préférence encore de 1000 à 1400°C.

16. Procédé selon la revendication 15 dans lequel la température de calcination est atteinte à partir de la température ambiante à une vitesse de montée de 0,1 à 100°C.min⁻¹, de préférence de 1 à 10°C.min⁻¹.

17. Procédé selon la revendication 15, dans lequel la température de calcination est maintenue pendant une durée de quelques secondes par exemple 2 secondes à plusieurs heures, de préférence de 1 à 10 h.

18. Procédé selon l'une quelconque des revendications précédentes, dans lequel dans l'étape e) on effectue un frittage simultané ou co-frittage, de la couche d'oxyde d'élément métallique et du substrat.

19. Procédé selon l'une des revendications précédentes, dans lequel le substrat est un substrat parfaitement dense, par exemple d'oxyde réfractaire.

20. Procédé selon l'une quelconque des revendications 1 à 18, dans lequel le substrat est un substrat poreux présentant une porosité ouverte et/ou fermée allant jusqu'à 50% en volume.

21. Procédé selon l'une quelconque des revendications précédentes, dans lequel le substrat est choisi parmi les substrats en métal, tels que les substrats en acier, en silicium ou en aluminium ; parmi les substrats en céramique, tels que les substrats en alumine ou en zircone yttriée ou non dopée ; parmi les substrats en verre et parmi les substrats composites formés par deux ou plus de ces familles de matériaux.

22. Procédé selon la revendication 21, dans lequel le substrat est un substrat en CERMET Ni-YSZ poreux formant par exemple une anode par exemple d'une pile à combustible de type SOFC.

## Patentansprüche

1. Verfahren zur Herstellung einer Metallelement-Oxidschicht auf einem Substrat, in dem nacheinander die folgenden Schritte ausgeführt werden:
a) Dispergieren eines Metallelement-Oxidpulvers in einem flüssigen Medium, das ein Dispersionslösungsmittel und ein Dispergiermittel umfasst, wobei das flüssige Medium weder Weichmacher noch Bindemittel enthält, wodurch eine Suspension A des Metallelement-Oxidpulvers in dem flüssigen Medium erhalten wird;
b) zu der Suspension A wird eine Lösung von mindestens einem Polymer in einem Lösungsmittel gegeben, wodurch eine Suspension B erhalten wird;
c) die Suspension B wird durch ein Tauch-Zieh-Beschichtungsverfahren auf dem Substrat abgeschieden, wodurch eine Grünschicht erhalten wird;
d) die in Schritt c) erhaltene Grünschicht wird getrocknet;
e) die in Schritt d) erhaltene getrocknete Schicht wird kalziniert; und wobei das Dispersionslösungsmittel eine azeotrope Ethanol-/ Methylethylketon-Mischung ist; das Metallelementoxid ist Yttrium-stabilisiertes Zirkoniumdioxid mit kubischer oder tetragonaler Struktur; und das Dispergiermittel ist aus Esterphosphaten ausgewählt.

2. Verfahren nach Anspruch 1, bei dem die am Ende von Schritt e) erhaltene Metallelement-Oxidschicht eine Dicke von 1 bis 100 µm aufweist.

3. Verfahren nach Anspruch 2, bei dem die am Ende von Schritt e) erhaltene Metallelement-Oxidschicht eine Dicke von 1 µm bis 10 µm aufweist.

4. Verfahren nach einem der vorhergehenden Ansprüche, bei dem der Gehalt an Metallelement-Oxidpulver in der Suspension A 1 bis 80 Gewichtsprozent, vorzugsweise 20 bis 60 Gewichtsprozent, besonders vorzugsweise 30 bis 50 Gewichtsprozent, besser 30 bis 40 Gewichtsprozent beträgt.

5. Verfahren nach einem der vorhergehenden Ansprüche, bei dem die Teilchen des Metallelement-Oxidpulvers eine Größe von 5 nm bis 5 µm, vorzugsweise 100 bis 300 nm, besser 50 bis 300 nm aufweisen.

6. Verfahren nach einem der vorhergehenden Ansprüche, bei dem der Massengehalt an Dispergiermittel in der Suspension A in Bezug auf die Masse der zugegebenen Metallelement-Oxidtrockenpulvers 0,1 bis 10 Gewichtsprozent, vorzugsweise 2 bis 3 Gewichtsprozent beträgt.

7. Verfahren nach einem der vorhergehenden Ansprüche, bei dem das Polymer aus Poly(aliphatischen Estern) ausgewählt ist.

8. Verfahren nach einem der Ansprüche 1 bis 6, bei dem das Polymer ein Polymer ist, das aus der Reaktion zwischen Hexamethylentetramin und Acetylaceton in saurem Medium, beispielsweise Essigsäure, erhalten werden kann.

9. Verfahren nach einem der vorhergehenden Ansprüche, bei dem die Lösung mindestens eines Polymers aus Schritt b) zudem die gleichen Metallelemente wie die des Oxidpulvers enthält.

10. Verfahren nach einem der vorhergehenden Ansprüche, bei dem die Lösung aus Schritt b) eine Viskosität von 5 mPa·s bis 1000 mPa·s, vorzugsweise von 20 bis 100 mPa·s aufweist.

11. Verfahren nach einem der vorhergehenden Ansprüche, bei dem in Schritt b) die Polymerlösung der Suspension A in einem Anteil zugesetzt wird, der als Massenverhältnis (rₘ) Masse der Polymerlösung / Masse der Suspension A von 0,01 bis 3, vorzugsweise von 0,1 bis 0,6 und besonders vorzugsweise von 0,1 bis 0,5 ausgedrückt wird.

12. Verfahren nach einem der vorhergehenden Ansprüche, bei dem das Tauch-Zieh-Beschichtungsverfahren aus Schritt c) einen Schritt des Entfernens des Substrats aus der Suspension B bei einer kontrollierten Geschwindigkeit von 0,1 bis 100 cm.min⁻¹, vorzugsweise 1 bis 10 cm.min⁻¹ umfasst.

13. Verfahren nach einem der vorhergehenden Ansprüche, bei dem das Trocknen bei einer Temperatur von Raumtemperatur bis 150 °C, vorzugsweise von Raumtemperatur bis 50 °C durchgeführt wird.

14. Verfahren nach Anspruch 13, bei dem die Trocknungsdauer 1 Min. bis 10 Std., vorzugsweise 1 Std. beträgt.

15. Verfahren nach einem der vorhergehenden Ansprüche, bei dem das Kalzinieren aus Schritt e) bei einer Kalzinierungstemperatur von 200 bis 1800 °C, vorzugsweise 400 bis 1800 °C, besonders vorzugsweise 1000 bis 1400 °C durchgeführt wird.

16. Verfahren nach Anspruch 15, bei dem die Kalzinierungstemperatur ab Raumtemperatur mit einer Anstiegsgeschwindigkeit von 0,1 bis 100 °C.min⁻¹, vorzugsweise 1 bis 10 °C.min⁻¹ erreicht wird.

17. Verfahren nach Anspruch 15, bei dem die Kalzinierungstemperatur für einen Zeitraum von wenigen Sekunden, beispielsweise 2 Sekunden, bis mehreren Stunden, vorzugsweise 1 bis 10 Stunden, aufrechterhalten wird.

18. Verfahren nach einem der vorhergehenden Ansprüche, bei dem in Schritt e) gleichzeitiges Sintern oder Co-Sintern der Metallelement-Oxidschicht und des Substrats durchgeführt wird.

19. Verfahren nach einem der vorhergehenden Ansprüche, bei dem das Substrat ein perfekt dichtes Substrat ist, zum Beispiel ein Substrat aus feuerfesten Oxid.

20. Verfahren nach einem der Ansprüche 1 bis 18, bei dem das Substrat ein poröses Substrat mit einer offenen und/oder geschlossenen Porosität von bis zu 50 Volumenprozent ist.

21. Verfahren nach einem der vorhergehenden Ansprüche, bei dem das Substrat ausgewählt ist aus Metallsubstraten, wie Stahl-, Silizium oder Aluminiumsubstraten; aus Keramiksubstraten, wie Substraten aus Aluminiumoxid oder Yttrium-stabilisiertem oder -nicht dotiertem Zirkoniumoxid; aus Glassubstraten und aus Verbundsubstraten, die aus zwei oder mehr dieser Materialfamilien bestehen.

22. Verfahren nach Anspruch 21, bei dem das Substrat ein poröses Ni-YSZ-CERMET-Substrat ist, das zum Beispiel eine Anode zum Beispiel einer SOFC-Brennstoffzelle bildet.

## Claims

1. Method for preparing a metal element oxide layer on a substrate, in which the following successive steps are carried out:
a) a metal element oxide powder is dispersed in a liquid medium comprising a dispersion solvent and a dispersant, said liquid medium containing neither plasticizer nor binder, whereby a suspension A of said metal element oxide powder in said liquid medium is obtained;
b) a solution of at least one polymer in a solvent is added to said suspension A, whereby a suspension B is obtained;
c) suspension B is deposited on the substrate by a dip coating method, whereby a green layer is obtained;
d) the green layer obtained in step c) is dried; and
e) the dried layer obtained in step d) is calcined; and whereby
the dispersion solvent is the azeotropic mixture ethanol/methyl ethyl ketone ; the metal element oxide is yttrium-stabilized zirconia of cubic or tetragonal structure; and the dispersant is chosen from phosphate esters.

2. Method according to Claim 1, in which the metal element oxide layer obtained at the end of step e) has a thickness of 1 µm to 100 µm.

3. Method according to Claim 2, in which the metal element oxide layer obtained at the end of step e) has a thickness of 1 µm to 10 µm.

4. Method according to any one of the preceding claims, in which the content of metal element oxide powder in suspension A is 1 to 80% by weight, preferably 20 to 60% by weight, more preferably 30 to 50% by weight and better still 30 to 40% by weight.

5. Method according to any one of the preceding claims, in which the metal element oxide powder particles have a size of 5 nm to 5 µm, preferably 100 to 300 nm and better still 50 to 300 nm.

6. Method according to any one of the preceding claims, in which the mass content of dispersant in suspension A is from 0.1 to 10% by weight, preferably 2 to 3% by weight, relative to the mass of dry metal element oxide powder added.

7. Method according to any one of the preceding claims, in which the polymer is chosen from poly(aliphatic esters).

8. Method according to any one of Claims 1 to 6, in which the polymer is a polymer obtainable from the reaction between hexamethylenetetramine and acetylacetone in acid medium, for example in acetic acid.

9. Method according to any one of the preceding claims, in which the solution of at least one polymer of step b) furthermore contains the same metal elements as those of the oxide powder.

10. Method according to any one of the preceding claims, in which the solution of step b) has a viscosity of 5 mPa.s to 1000 mPa.s, preferably 20 to 100 mPa.s.

11. Method according to any one of the preceding claims, in which, in step b), the polymer solution is added to suspension A in a proportion expressed as a mass ratio (rₘ), namely the ratio mass of polymer solution/mass of suspension A, of 0.01 to 3, preferably 0.1 to 0.6 and more preferably 0.1 to 0.5.

12. Method according to any one of the preceding claims, in which the dip coating method of step c) includes a step of removing the substrate from suspension B at a controlled rate of 0.1 to 100 cm/min, preferably 1 to 10 cm/min.

13. Method according to any one of the preceding claims, in which the drying is carried out at a temperature ranging from room temperature to 150°C, preferably from room temperature to 50°C.

14. Method according to Claim 13, in which the drying time is from 1 min to 10 h, preferably 1 h.

15. Method according to any one of the preceding claims, in which the calcination of step e) is carried out at a calcination temperature of 200 to 1800°C, preferably 400 to 1800°C and more preferably 1000 to 1400°C.

16. Method according to Claim 15, in which the calcination temperature is reached, starting from room temperature, at a rate of increase of 0.1 to 100°C/min, preferably 1 to 10°C/min.

17. Method according to Claim 15, in which the calcination temperature is maintained for a time of a few seconds, for example 2 seconds to several hours, preferably 1 to 10 h.

18. Method according to any one of the preceding claims, in which, in step e), the metal element oxide layer and the substrate undergo a simultaneous sintering, or cosintering, operation.

19. Method according to any one of the preceding claims, in which the substrate is a fully dense substrate, for example a refractory oxide substrate.

20. Method according to any one of Claims 1 to 18, in which the substrate is a porous substrate having an open and/or closed porosity ranging up to 50% by volume.

21. Method according to any one of the preceding claims, in which the substrate is chosen from: metal substrates, such as steel, silicon or aluminium substrates; ceramic substrates, such as alumina or yttrium-stabilized zirconia substrates, whether or not doped; glass substrates; and composite substrates formed from two or more of these families of materials.

22. Method according to Claim 21, in which the substrate is a porous Ni-YSZ cermet substrate forming for example an anode, for example of an SOFC fuel cell.
